(19) Europäisches Patentamt
European Patent Office
Office européen des brevets

(11) EP 3 261 759 B1

(12) # EUROPEAN PATENT SPECIFICATION

(45) Date of publication and mention of the grant of the patent:
**06.05.2020 Bulletin 2020/19**

(21) Application number: **16756391.5**

(22) Date of filing: **25.02.2016**

(51) Int Cl.:
***H01G 4/01*** *(2006.01)* ***H01G 4/015*** *(2006.01)*
***H01G 4/008*** *(2006.01)* ***H01G 4/18*** *(2006.01)*
*C09D 179/02 (2006.01)* *C08G 69/32 (2006.01)*
*C08G 73/02 (2006.01)* *C08G 73/10 (2006.01)*
*C08G 73/14 (2006.01)* *C08G 73/18 (2006.01)*

(86) International application number:
**PCT/US2016/019641**

(87) International publication number:
**WO 2016/138310 (01.09.2016 Gazette 2016/35)**

(54) **SELF-HEALING CAPACITOR AND METHODS OF PRODUCTION THEREOF**

SELBSTREPARIERENDER KONDENSATOR UND VERFAHREN ZUR HERSTELLUNG DAVON

CONDENSATEUR AUTORÉGÉNÉRATEUR ET SES PROCÉDÉS DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2015 US 201562121328 P**

(43) Date of publication of application:
**03.01.2018 Bulletin 2018/01**

(73) Proprietor: **Capacitor Sciences Incorporated**
**Menlo Park, CA 94025 (US)**

(72) Inventors:
- **KELLY-MORGAN, Ian S.G.**
  **Menlo Park, California 94025 (US)**
- **LAZAREV, Pavel Ivan**
  **Menlo Park, California 94025 (US)**

(74) Representative: **Dehns**
**St. Bride's House**
**10 Salisbury Square**
**London EC4Y 8JD (GB)**

(56) References cited:
**CN-A- 103 258 656**
**JP-A- 2001 093 778**
**US-A- 5 581 437**
**US-A1- 2002 048 140**
**US-A1- 2008 002 329**
**US-A1- 2014 185 260**
**US-B1- 6 282 081**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 261 759 B1

Printed by Jouve, 75001 PARIS (FR)

## Description

## BACKGROUND

A capacitor is a passive electronic component that is used to store energy in the form of an electrostatic field, and comprises a pair of electrodes separated by a dielectric layer. When a potential difference exists between two electrodes, an electric field is present in the dielectric layer. An ideal capacitor is characterized by a single constant value of capacitance which is a ratio of the electric charge on each electrode to the potential difference between them. In practice, the dielectric layer located between electrodes may pass a small amount of leakage current. Electrodes and leads introduce an equivalent series resistance, and dielectric layer has limitation to an electric field strength which results in a breakdown voltage.

A characteristic electric field known as the breakdown strength $E_{bd}$, is an electric field in which the dielectric layer in a capacitor becomes conductive. Voltage at which this occurs is called the breakdown voltage of the device, and is given by the product of dielectric strength and separation (distance) d between the electrodes,

$$V_{bd} = E_{bd}d \qquad (1)$$

The maximal volumetric energy density stored in the capacitor is limited by the value proportional to $\sim\varepsilon \cdot E^2_{bd}$, where ε is dielectric permittivity of the dielectric layer and $E_{bd}$ is breakdown dielectric strength. Thus, in order to increase the stored energy of the capacitor it is necessary to increase dielectric permeability ε and breakdown dielectric strength $E_{bd}$ of the dielectric.

For high voltage applications, much larger capacitors can be used. There are a number of factors that can dramatically reduce the breakdown voltage. Geometry of the conductive electrodes is important for capacitor applications. In particular, sharp edges or points hugely increase the electric field strength locally and can lead to a local breakdown. Once a local breakdown starts at any point, the breakdown permeates through the dielectric layer and reaches the opposite electrode. Breakdown trace (electrically conductive channel) is conductive and causes a short circuit.

Breakdown of the dielectric layer usually occurs because intensity of an electric field becomes high enough to free electrons from atoms of the dielectric material and make them conduct an electric current from one electrode to another. Presence of impurities in the dielectric or imperfections (electric defects) of the crystal structure can result in an avalanche breakdown as observed in semiconductor devices. Thus, electrically conductive channels are formed in the dielectric layer when breakdown occurs. These channels have exit points on both surfaces of the dielectric layer.

Capacitors as energy storage device have well-known advantages versus electrochemical energy storage, e.g. a battery. Compared to batteries, capacitors are able to store energy with very high power density, i.e. charge/recharge rates, have long shelf life with little degradation, and can be charged and discharged (cycled) hundreds of thousands or millions of times. However, capacitors often do not store energy in small volume or weight as in case of a battery, or at low energy storage cost, which makes capacitors impractical for some applications, for example electric vehicles.

JP 2001 093778 discloses a capacitor comprising a metalized film which serves as an electrode. CN 103 258 656 discloses a method for preparing electrodes of a dissymmetric supercapacitor based on nickel foam. US 2008/002329 discloses a high-dielectric, non-linear capacitor comprising a chromophore between two electrodes.

## SUMMARY

The present disclosure provides self-healing capacitor and methods of production thereof. A self-healing capacitor of the present disclosure can solve a problem of increase of volumetric and mass density of reserved energy associated with some energy storage devices, and at the same time reduce cost of materials and manufacturing process.

In an aspect, a self-healing capacitor comprises a first electrode, a second electrode, and a dielectric layer disposed between said first and second electrodes and having first surface facing the first electrode and second surface facing the second electrode. At least one of the electrodes comprises metal foam. Said dielectric layer has a plurality of electrically conductive channels each of them having one exit point located on the first surface of the dielectric layer and another exit point located on the second surface of the dielectric layer. Each of said first and second electrodes comprises at least one local contact breaker adjacent to the dielectric layer and located opposite to at least one exit point that interferes with passage of electric current through the conductive channels in the dielectric layer. The electrodes are planar and can be nearly or substantially parallel to each other, though not necessarily flat. The electrodes can be offset from a parallel configuration.

In another aspect, a method of producing a self-healing capacitor having at least one electrode made of metal foam, which comprises a) application of an electric voltage to capacitor electrodes and gradual enhancement of the magnitude of the voltage until electric breakdown of a dielectric layer will occur, b) formation under influence of electric

field of electrically conductive channels which have exit points on both surfaces of the dielectric layer, c) formation of local contact breakers (through holes and dome structures) within electrode near these exit points due to the Joule heating of the metal by the current induced by the breakdown, d) extinguishing of the current when enough metal of the electrodes is evaporated around these exit points.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

## BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

**Figure** 1 schematically shows a self-healing capacitor, in accordance with some embodiments of the present disclosure.

## DETAILED DESCRIPTION

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed. Capacitors made of metalized polypropylene films suffer partial discharges due to weak electrical defects and have protective mechanism called self-healing. Self-healing occurs when a dielectric breakdown causes a large current density to flow into a fault, which heats a local electrode area and evaporates the metal. This event forms an electrical isolation at the breakdown site rather than forming a permanent short circuit, and allows the capacitor to continue operating with only a small loss of active area. Those defects can be destroyed by an electrical arc that extinguishes when enough metal of the electrodes is vaporized around this point. The volatilized area of self-healing is can be due to the Joule heating of the metal by the current pulse induced by the local breakdown, and the local discharge stops (arc extinction), although the voltage applied to the film remains constant, when the power density becomes lower than some critical power density.

Other important characteristic of a dielectric material is dielectric permittivity. Different types of dielectric materials are used for capacitors and include ceramics, polymer film such as polypropylene and polyester, paper, and electrolytic capacitors of different kinds. Increase of dielectric permittivity can provide an increase of volumetric energy density.

The present disclosure provides a self-healing capacitor. In one embodiment of the present invention, the first electrode has local contact breakers (discontinuities, irregularities) which are located within the first electrode on the border between the dielectric layer and the first electrode. These local contact breakers are located opposite to all exit points which are located on the first surface of the dielectric layer. The local contact breakers prevent an electric current through the conductive channels in dielectric layer. The second electrode has the local contact breakers (discontinuities, irregularities) which are located within the second electrode on the border between the dielectric layer and the second electrode. These local contact breakers are located opposite to all exit points which are located on the second surface of the dielectric layer. The local contact breakers prevent an electric current through the conductive channels in dielectric layer. The local contact breakers may be formed during the capacitor manufacturing process as part of a "burn-in" procedure or may be formed as a result of long term use of the capacitor.

A form of the local contact breaker can be selected from the list comprising a) a reach-through hole (gap, opening) which penetrate through whole thickness of the electrode and b) a dome structure located inside (within) the electrode on border with the dielectric layer.

Conductive channels are formed in the course of electrical breakdown of the dielectric layer due to an electric arc in the material of the dielectric layer. Formation of local contact breakers within electrode near the exit points is carry out due to the Joule heating of the metal by the current induced by the breakdown. In another embodiment of the present invention, the metal of the metal foam is Aluminum (Al), Nickel (Ni), Iron (Fe), or Copper (Cu). Metal foam is a cellular structure consisting of a solid metal as well as a large volume fraction of gas-filled pores ("bubbles"). The pores can be sealed (closed-cell foam), or they can form an interconnected network (open-cell foam).

A characteristic of metal foams is that a very high porosity, for example, 75-95% of the volume, can consist of void spaces making these ultra-light materials. Metallic foams typically can some physical properties of their base material. Foam made from non-flammable metal can remain non-flammable and the foam can be recyclable back to its

base material. Coefficient of thermal expansion will also remain similar while thermal conductivity can be reduced.

In another embodiment of the self-healing capacitor, a melting temperature of the metal foam is in the range about 400 °C - about 700 °C. In yet another embodiment of the self-healing capacitor, metal content in the metal foam for electrode is in the range of about 5% to about 30% by volume. In some implementations, the resistivity of the metal foam may be tuned such that the metal foam ablates before the dielectric material when current flows in a conductive channel through the dielectric layer as a result of application of a voltage between the first electrode and second electrode.. Tuning the resistivity is largely a matter of choice of metal and adjustment of porosity of the foam.

In still another embodiment of the self-healing capacitor, the metal foam is of closed bubble type with maximum conductance per metal content. The dome structure located inside (within) the metal foam electrode on border with the dielectric layer is formed due to high temperature in the electric arc as a result of fusion and/or evaporation of the metal partition walls (partitions, dividers) separating bubbles in metal foam. Bubble coalescence is carried out due to high surface tension of liquid metal and high content of gas bubbles. Thus, bubble coalescence forms local contact breakers of a dome structure inside layer of foam electrode. The holes (gaps, openings) which penetrate through whole thickness of the metal foam electrode are formed due to evaporation of metal as a result of high temperature in the electric arc and due to high surface tension of liquid metal. In one embodiment of the present invention, the size, or the mean particle size, of the bubbles is in the range of about 100 nm to about 100,000 nm.

In another embodiment of the self-healing capacitor, the first electrode and the second electrode comprise metal foam. In another embodiment of the self-healing capacitor, the first electrode comprises the metal foam and the second electrode comprises a foil. In yet another embodiment of the self-healing capacitor, the metal of the foil is Al, Ni, Fe, or Cu.

In another embodiment of the self-healing capacitor, the first electrode comprises the metal foam and the second electrode comprises a deposited thin film metal with thickness of the film in the range from about 20 nanometers (nm) to about 2000 nm. In another embodiment of the self-healing capacitor, the deposited thin film metal is Al, Ni, Fe, or Cu. The dome structures and holes (gaps, openings) in foils and in deposited metal thin film are formed as a result of fusion and/or evaporation of metal due to high temperature in the electric arc and due to high surface tension of liquid metal.

In one embodiment of the present invention, the dielectric layer is crystalline. The dielectric layer can be fabricated from any suitable crystalline material including a single crystal material, a batch crystal material, or amorphous material.

The dielectric layer can possess a different structure in the range between an amorphous and crystalline solid layer, depending on the material and manufacturing procedure used. In one embodiment of the disclosed self-healing capacitor, the dielectric layer comprises a material selected from oxides, nitrides, oxynitrides and fluorides. In another embodiment of the disclosed self-healing capacitor, the dielectric layer comprises a material selected from $SiO_2$, $HfO_2$, $Al_2O_3$ or $Si_3N_4$. In one embodiment of the disclosed self-healing capacitor, the dielectric layer comprises modified organic compounds of the general structural formula I: $\{Cor\}(M)_n$, (I) where Cor is a polycyclic organic compound with conjugated $\pi$-system, M a modifying functional group; and *n* is the number of the modifying functional groups that is greater than or equal to zero. In another embodiment of the present invention, the polycyclic organic compound is oligophenyl, imidazole, pyrazole, acenaphthene, triaizine, or indanthrone. Non-limiting examples are given in Table 1.

Table 1. Examples of the polycyclic organic compound for the dielectric layer

| | |
|---|---|
| 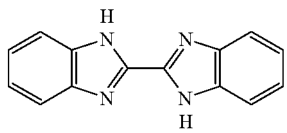 | 1 |
| 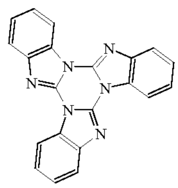 | 2 |
| 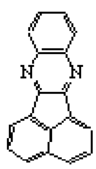 | 3 |

(continued)

| | |
|---|---|
| 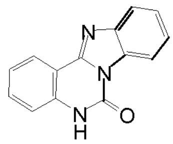 | 4 |
| 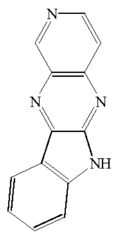 + 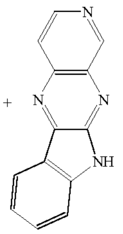 | 5 |
| 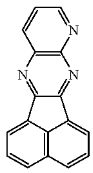 | 6 |
| 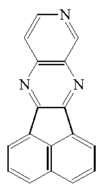 | 7 |
| 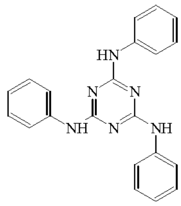 | 8 |
| 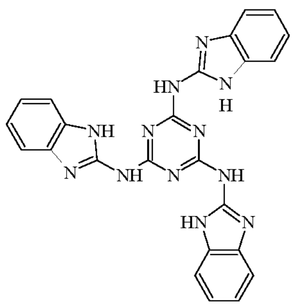 | 9 |
| 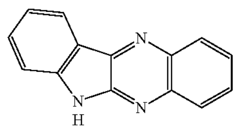 | 10 |
| 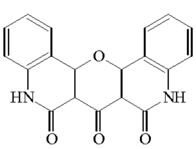 | 11 |

(continued)

| | |
|---|---|
| 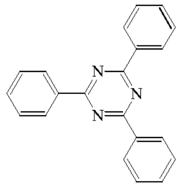 | 12 |
| 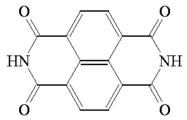 | 13 |
| 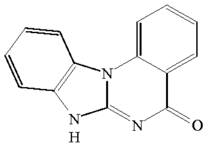 | 14 |
| 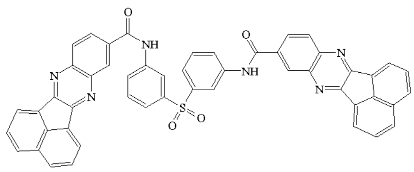 | 15 |
| 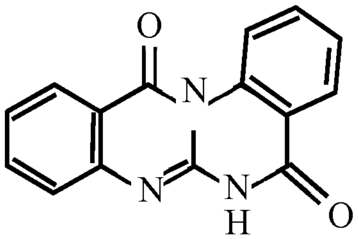 | 16 |
| 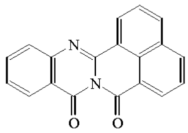 | 17 |
| 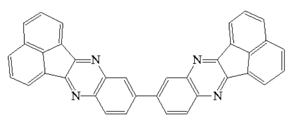 | 18 |
| 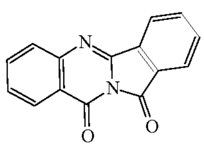 | 19 |
| 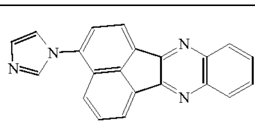 | 20 |
| 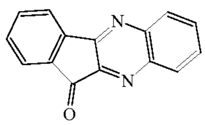 | 21 |

(continued)

| | |
|---|---|
| 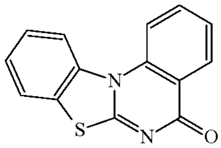 | 22 |
| 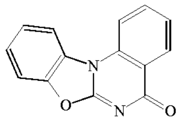 | 23 |
| 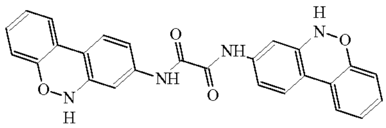 | 24 |
| 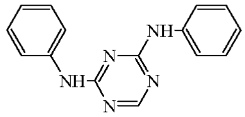 | 25 |
| 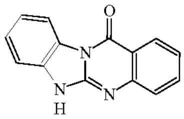 | 26 |
| 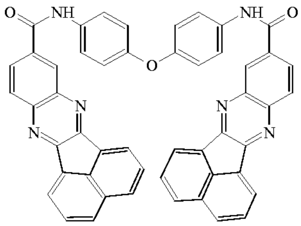 | 27 |
| 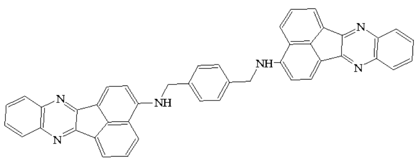 | 28 |
| 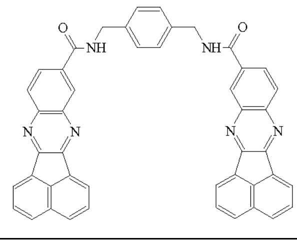 | 29 |
| 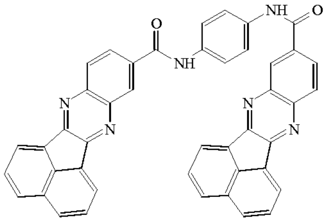 | 30 |

(continued)

| | |
|---|---|
| 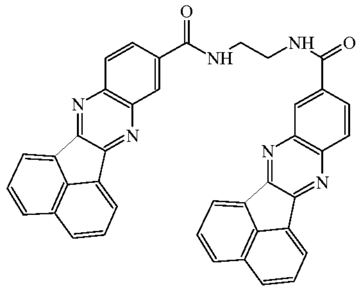 | 31 |
| 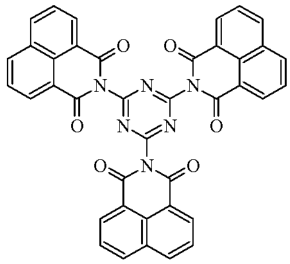 | 32 |
| 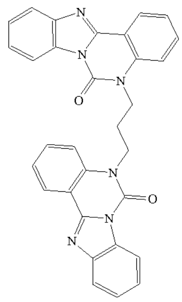 | 33 |
| 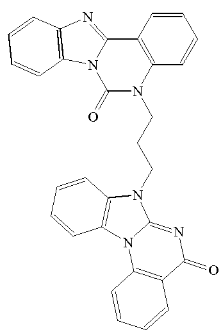 | 34 |
| 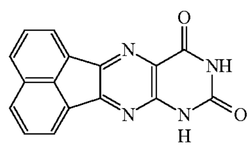 | 35 |
| 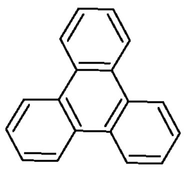 | 36 |

(continued)

| | |
|---|---|
| 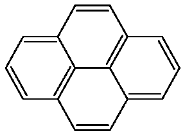 | 37 |
| 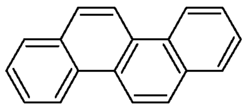 | 38 |
| 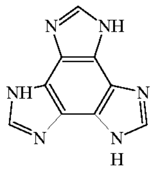 | 39 |
| 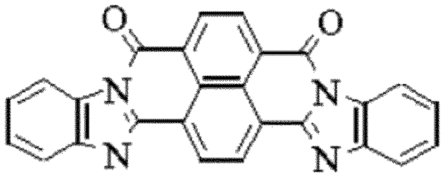 | 40 |
| 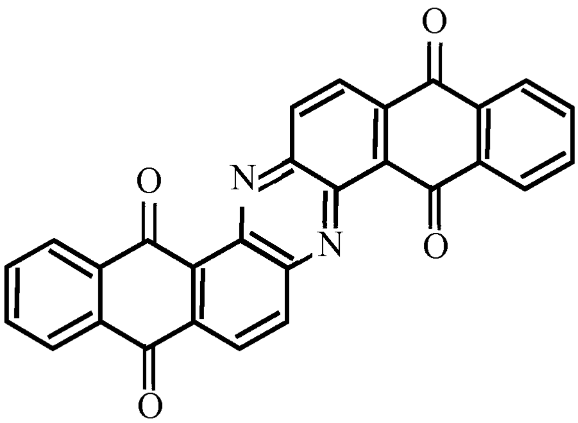 | 41 |

In another embodiment of the present invention, the polycyclic organic compound is an arylene dye of the following formula:

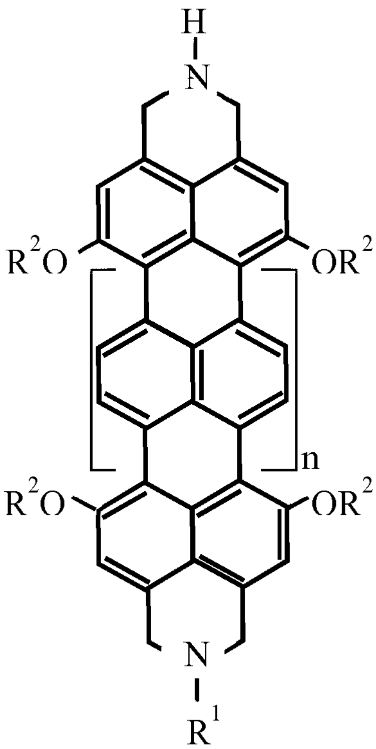

wherein n is equal to 0, 1, 2, 3, 4, 5, or 6, $R^1$ is diisopropylphenyl, and $R^2$ is tert-octylphenyl. In another embodiment of the present invention, the modifying functional groups are alkyl, aryl, substituted alkyl, substituted aryl, or any combination thereof. The modifying functional groups provide solubility of organic compounds at the stage of manufacturing and additional insulating properties to the dielectric layer of the self-healing capacitor. In another embodiment of the present invention, the dielectric layer comprises a polymeric material such as fluorinated alkyl, polyethylene, Poly-paraphenylene terephthalamide, poly(vinylidene fluoride-hexafluoropropylene), polypropylene, fluorinated polypropylene, or polydimethylsiloxane. In another embodiment of the present invention, the dielectric layer comprises a polymeric material comprising a polymer having a repeat group of Table 2.

Table 2. Examples of the water-soluble polymers for the dielectric layer

| | |
|---|---|
| 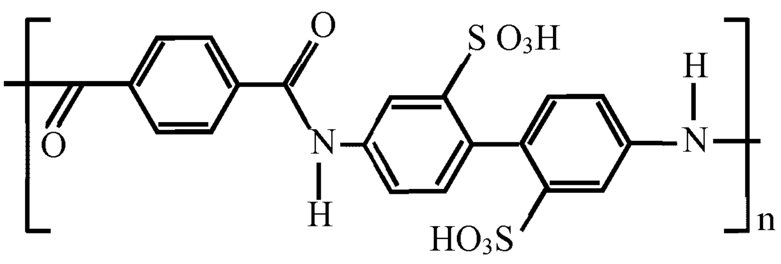 poly(2,2'-disulfo-4,4'-benzidine terephthalamide) | 42 |
| 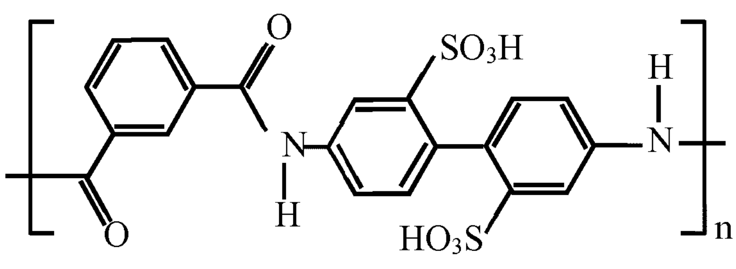 poly(2,2'-disulfo-4,4'-benzidine isophthalamide) | 43 |

(continued)

| | |
|---|---|
| 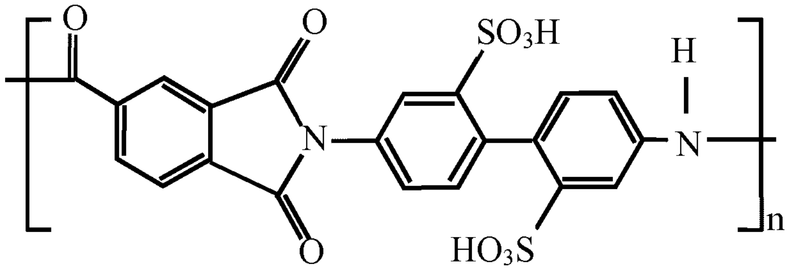<br>poly(2,2'-disulfo-4,4'-benzidine 1,3-dioxo-isoindoline-5-carboxamide) | 44 |
| 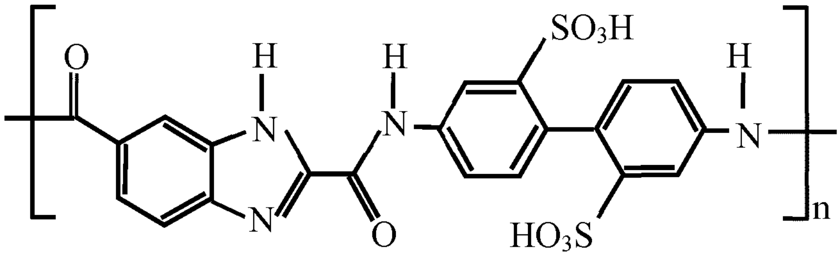<br>poly(2,2'-disulfo-4,4'-benzidine 1H-benzimidazole-2,5-dicarboxamide) | 45 |
| 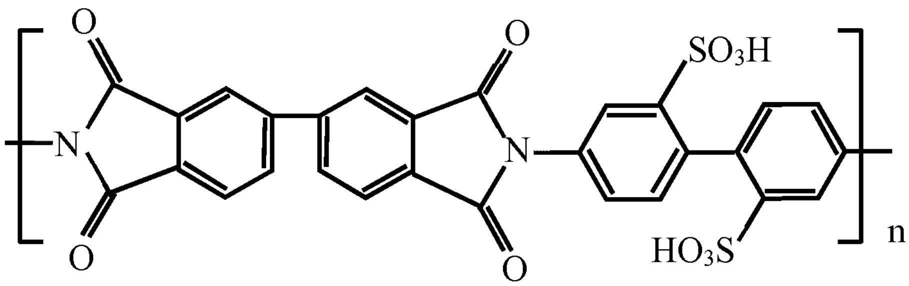<br>poly(2,2'-disulfo-4,4'-benzidine 3,3',4,4'-biphenyl tetracarboxylic acid diimide) | 46 |
| 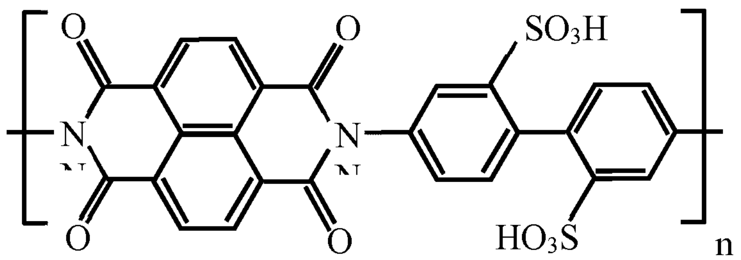<br>poly(2,2'disulpho-4,4'benzidine 1,4,5,8-naphtalen tetracarboxylic acid diimide) | 47 |

In another embodiment of the present invention, the dielectric layer comprises a polymeric material comprising a repeat group of Table 3.

Table 3. Examples of the polymers soluble in organic solvents for the dielectric layer

| | |
|---|---|
| 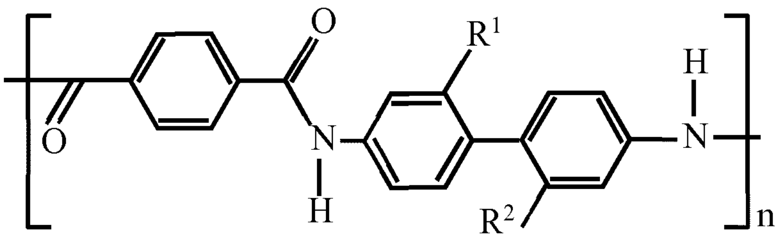 | 48 |
| 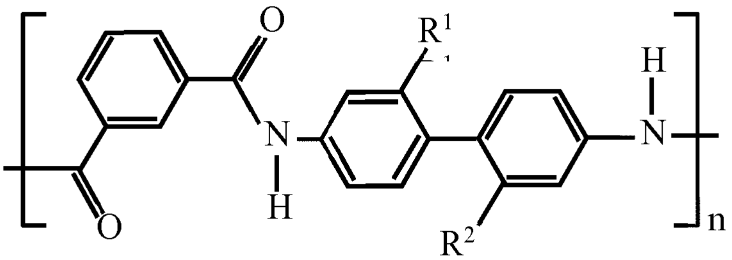 | 49 |
| 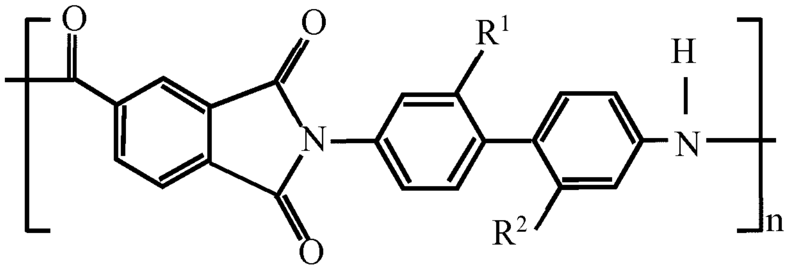 | 50 |
| 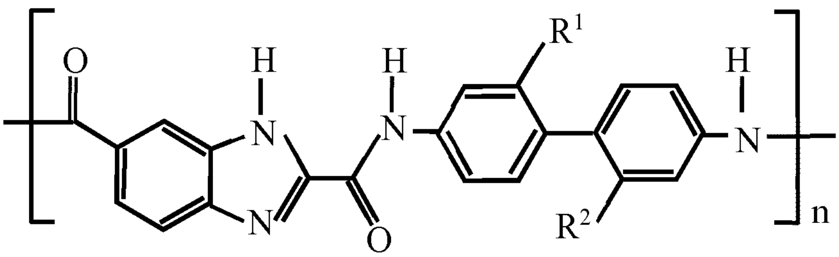 | 51 |
| 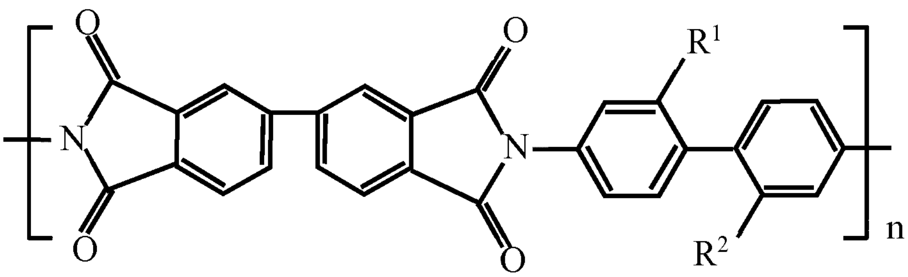 | 52 |
| 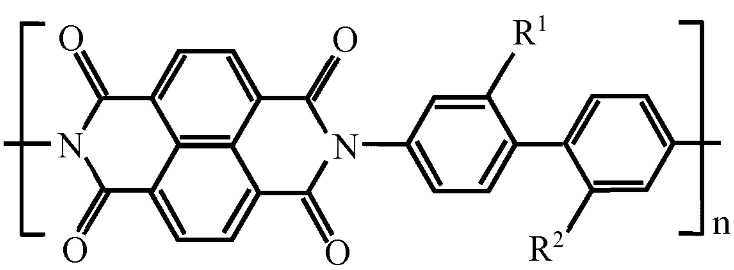 | 53 |

wherein the modifying functional groups $R^1$ and $R^2$ are independently alkyl, aryl, substituted alkyl, substituted aryl, or

any combination thereof.

In one embodiment of the present invention, the dielectric layer is at least partly, wholly or substantially wholly crystalline. As an alternative, the dielectric layer is amorphous. In one embodiment of the present invention, the dielectric layer comprises a colloidal composite with a microdispersion of electro-conductive nano-particles in an insulator matrix. In another embodiment of the present invention, the electro-conductive nano-particles comprise an electro-conductive oligomer. In yet another embodiment of the present invention, the longitudinal axes of the electro-conductive oligomers are directed predominantly perpendicularly in relation to the electrode surface. Non-limiting examples of repeat groups for an electro-conductive oligomer are given in Table 4.

Table 4. Examples of the electro-conductive oligomers for the dielectric layer

| | |
|---|---|
| 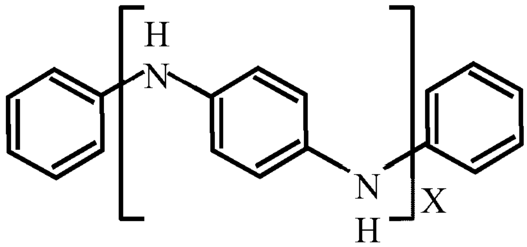 | 54 |
| 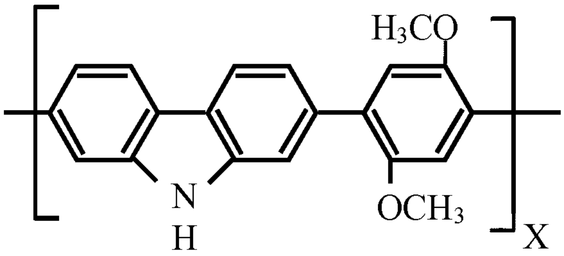 | 55 |
| 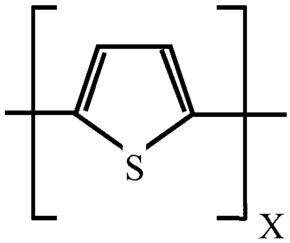 | 56 |
| 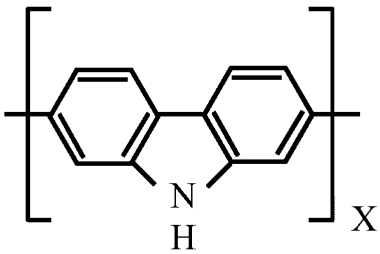 | 57 |
| 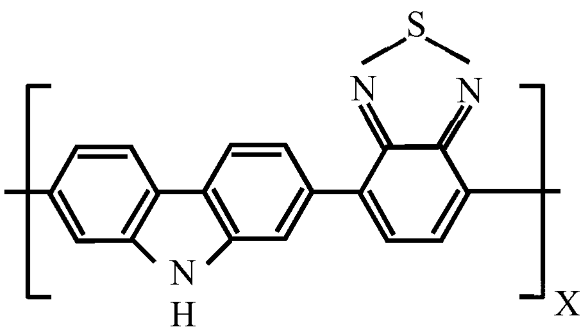 | 58 |

(continued)

| | |
|---|---|
| 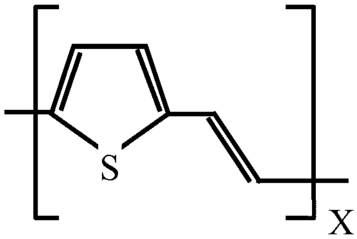 | 59 |
| 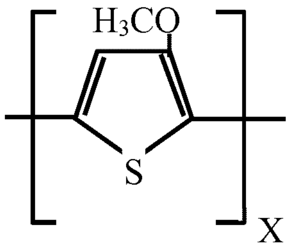 | 60 |

wherein X = 2, 3, 4, 5, 6, 7, 8, 9, 10, 11, or 12. In another embodiment of the disclosed self-healing capacitor, the electroconductive oligomer further comprises substitute groups and is described by the following general structural formula II:

(electroconductive oligomer)-$R_q$, (II)

wherein $R_q$ is a set of substitute groups, and q is a number of the substitute groups $R$ in the set $R_q$, and $q$ is a number that is greater than or equal to zero. In yet another embodiment of the self-healing capacitor, the substitute groups $R$ are independently alkyl, aryl, substituted alkyl, substituted aryl, or any combination thereof. In another embodiment of the self-healing capacitor, a material of the insulator matrix is poly (acrylic acid) (PAA), poly(*N*-vinylpyrrolidone) (PVP), poly(vinylidene fluoride-hexafluoropropylene) [P(VDF-HFP)], ethylene propylene polymers, which include ethylene propylene

rubber (EPR) and ethylene propylene diene monomer (EPDM), and silicone rubber (PDMSO) such as dimethyldicloro siloxane, dimethylsilane diol, or polydimethyl siloxane. These compounds can serve as a stabilizer, protecting the electro-conductive nano-particles from macroscopic aggregation.

In another embodiment of the present invention, a dielectric layer comprises a surfactant such as dodecylbenzene sulfonate (DBSA), polyoxyethylene glycol alkyl ethers, polyoxypropylene glycol alkyl ethers, polyoxyethylene glycol octylphenol ethers, polyoxyethylene glycol sorbitan alkyl esters, sorbitan alkyl esters, and dobecyldimethylamine oxide.

In one embodiment of the present invention, the electrically conductive channel is characterized by electric defects united together due to breakdown of the dielectric layer. In another embodiment of the present invention, the electrode comprising metal foam serves as a carrying element of the capacitor since the metal foam has a high stiffness.

The present invention also provides a method of producing the self-healing capacitor as disclosed hereinabove.

Figure 1 shows an embodiment of the disclosed self-healing capacitor that includes first electrode 1, dielectric layer 2, second electrode 3, electrically conductive channel 4, an exit point 5, another exit point 6, first surface of the dielectric layer 7, second surface of the dielectric layer 8, through hole (opening) 9 and dome structure inside electrode 10.

Example 1

In this embodiment of the present invention, the dielectric layer comprises a composite of polyaniline, PANI-DBSA/PAA, synthesized using *in situ* polymerization of aniline in an aqueous dispersion of poly-acrylic acid (PAA) in the presence of dodecylbenzene sulfonate (DBSA). The thickness of the dielectric layer is equal to 50 $\mu$m. The composite of polyaniline, PANI-DBSA/PAA has the dielectric permittivity equal to 100,000. The electrodes are made of metal foam comprising aluminum (Al). The thickness of these electrodes is equal to 10 nm. Melting temperature of foam is about 400 °C and metal content in the foam for these electrodes is about 30% by weight. The foam is of closed bubble type with maximum conductance per metal content. The size of the bubbles is in the range of about 100 nm to about 100,000 nm.

Example 2

In this embodiment of the present invention, the dielectric layer comprises a composite of polyaniline, PANI-DBSA/PAA, synthesized using *in situ* polymerization of aniline in an aqueous dispersion of poly-acrylic acid (PAA) in the presence of dodecylbenzene sulfonate (DBSA). The thickness of the dielectric layer is equal to 50 μm. The composite of polyaniline, PANI-DBSA/PAA has a dielectric permittivity equal to 100,000. The first electrode is made of metal foam comprising aluminum (Al). The thickness of this electrode is equal to 10 nm. The second electrode is made of metal foil comprising aluminum (Al). The thickness of this electrode is equal to 10 nm. Melting temperature of foam is around 400 °C and metal content in the foam for these electrodes is about 30% by weight. The foam is of closed bubble type with maximum conductance per metal content. The size of the bubbles can be in the range of about 100 nanometers (nm) to 100,000 nm.

Example 3

In this embodiment of the present invention, the dielectric layer comprises a composite of polyaniline, PANI-DBSA/PAA, synthesized using *in situ* polymerization of aniline in an aqueous dispersion of poly-acrylic acid (PAA) in the presence of dodecylbenzene sulfonate (DBSA). The thickness of the dielectric layer is equal to 50 μm. The composite of polyaniline, PANI-DBSA/PAA has the dielectric permittivity equal to 100,000. The first electrode is made of metal foam comprising aluminum (Al). The thickness of this electrode is equal to 10 nm. The second electrode is made of deposited thin film metal comprising aluminum (Al). The thickness of this electrode is equal to 10 nm. Melting temperature of foam is around 400 °C and metal content in the foam for these electrodes is about 30% by weight. The foam is of closed bubble type with maximum conductance per metal content. The size of the bubbles is in the range of about 100 nm to about 100,000 nm.

While preferred embodiments of the present invention have been shown and described herein, it will be obvious to those skilled in the art that such embodiments are provided by way of example only. It is not intended that the invention be limited by the specific examples provided within the specification. While the invention has been described with reference to the aforementioned specification, the descriptions and illustrations of the embodiments herein are not meant to be construed in a limiting sense. Numerous variations, changes, and substitutions will now occur to those skilled in the art without departing from the invention. Furthermore, it shall be understood that all aspects of the invention are not limited to the specific depictions, configurations or relative proportions set forth herein which depend upon a variety of conditions and variables. It should be understood that various alternatives to the embodiments of the invention described herein may be employed in practicing the invention. It is therefore contemplated that the invention shall also cover any such alternatives, modifications, variations or equivalents. It is intended that the following claims define the scope of the invention and that methods and structures within the scope of these claims be covered thereby.

**Claims**

1. A self-healing capacitor comprising
a first electrode (1),
a second electrode (3), and
a dielectric layer (2) disposed between said first and second electrodes (1, 3) and having first surface (7) facing the first electrode (1) and a second surface (8) facing the second electrode (3),
wherein said electrodes (1, 3) are planar and positioned nearly or substantially parallel to each other,
wherein at least one of the electrodes (1, 3) includes a metal foam, and
wherein the metal foam is configured to form a contact breaker by way of metal evaporation at an end of a conductive channel (4) in the dielectric layer when current flows in the conductive channel as a result of application of a voltage between the first electrode (1) and second electrode (3).

2. A self-healing capacitor according to Claim 1, wherein said dielectric layer (2) comprises a plurality of electrically conductive channels (4), each of said channels (4) having one exit point (5) located on the first surface (7) of the dielectric layer (2) and another exit point (6) located on the second surface (8) of the dielectric layer (2), and
wherein each of said first and second electrodes (1, 3) comprises at least one local contact breaker adjacent to the dielectric layer (2) and located opposite to at least one exit point (5, 6) that interferes with passage of electric current through the conductive channels (4) in the dielectric layer (2), wherein the electrically conductive channel (4) includes electric defects united together due to breakdown of the dielectric layer (2).

3. A self-healing capacitor according to Claim 2, wherein the local contact breaker is a hole (9) that penetrates an

entire thickness of a respective one of the first and second electrodes; or wherein the local contact breaker is a dome structure (10).

4. A self-healing capacitor according to Claim 1, wherein the metal foam includes Aluminum (Al) or Nickel (Ni) or Iron (Fe) or Copper (Cu).

5. A self-healing capacitor according to Claim 1, wherein a melting temperature of the metal foam is from about 400 °C to about 700 °C.

6. A self-healing capacitor according to Claim 1, wherein a metal content in the metal foam is from about 5% to about 30% by weight.

7. A self-healing capacitor according to Claim 1, wherein the metal foam is of a closed bubble type.

8. A self-healing capacitor according to Claim 1, wherein the first electrode (1) comprises the metal foam and the second electrode (3) comprises a foil, preferably wherein the foil includes Aluminum (Al) or Nickel (Ni) or Copper (Cu) or Iron (Fe).

9. A self-healing capacitor according to Claim 1, wherein the first electrode (1) comprises the metal foam and the second electrode (3) comprises a deposited thin film metal, preferably wherein the deposited thin film metal includes Aluminum (Al) or Nickel (Ni) or Iron (Fe) or Copper (Cu).

10. A self-healing capacitor according to Claim 1, wherein the resistivity of the metal foam is tuned such that the metal foam ablates before the dielectric layer (2) when current flows in a conductive channel (4) through the dielectric layer (2) as a result of application of a voltage between the first electrode (1) and second electrode (3).

11. A self-healing capacitor according to Claim 1, wherein the dielectric layer (2) comprises modified organic compounds of the general structural formula I:

$$\{Cor\}(M)_n, \qquad (I)$$

wherein Cor is a polycyclic organic compound with conjugated $\pi$-system, each M is a modifying functional group; and *n* is a number of the modifying functional groups that is greater than or equal to zero.

12. A self-healing capacitor according to Claim 11 wherein the modifying functional groups are selected from the group consisting of alkyl, aryl, substituted alkyl, and substituted aryl.

13. A self-healing capacitor according to Claim 1, wherein said dielectric layer (2) comprises a material selected from the group consisting of oxides, nitrides, oxynitrides and fluorides or wherein said dielectric layer (2) comprises a material selected from the group consisting of $SiO_2$, $HfO_2$, $Al_2O_3$ and $Si_3N_4$.

14. A method of producing a self-healing capacitor, comprising:

(a) applying an electric voltage across a first electrode (1) and a second electrode (3) that are separated by a dielectric layer (2), which applying comprises a gradual enhancement of the electric voltage to achieve electric breakdown, wherein at least one of the first and second electrodes (1, 3) includes a metal foam;
(b) applying an electric field across the first electrode (1) and the second electrode (3) to form electrically conductive channels (4) with exit points (5, 6) on opposing surfaces (7, 8) of the dielectric layer (2);
(c) applying a current through the first and second electrodes (1, 3) to (i) induce Joule heating in at least one of the first and second electrodes (1, 3) and (ii) form local contact breakers in at least one of the first and second electrodes (1, 3), which local contact breakers are formed adjacent or in proximity to the exit points (5, 6); and
(d) terminating the application of the current upon formation of the local contact breakers.

15. The method of claim 14, wherein the application of the current is terminated upon when a sufficient amount of metal has evaporated from at least one of the first and second electrodes (1, 3) to form the local contact breakers.

## Patentansprüche

1. Selbstheilender Kondensator, umfassend
eine erste Elektrode (1),
eine zweite Elektrode (3) und
eine dielektrische Schicht (2), angeordnet zwischen den ersten und zweiten Elektroden (1, 3) und die eine erste Oberfläche (7) hat, die der ersten Elektrode (1) gegenüber liegt und eine zweite Oberfläche (8), die der zweiten Elektrode (3) gegenüber liegt,
wobei die Elektroden (1, 3) planar sind und nahezu oder im Wesentlichen parallel zu einander positioniert sind,
wobei mindestens eine der Elektroden (1, 3) einen Metallschaum einschließt, und wobei der Metallschaum konfiguriert ist, um eine Kontaktunterbrechung zu bilden mittels Metallverdampfung an einem Ende eines leitfähigen Kanals (4) in der dielektrischen Schicht, wenn Strom in dem leitfähigen Kanal fließt, als ein Resultat der Anwendung einer Spannung zwischen der ersten Elektrode (1) und der zweiten Elektrode (3).

2. Selbstheilender Kondensator nach Anspruch 1, wobei die dielektrische Schicht (2) eine Vielzahl von elektrisch leitfähigen Kanälen (4) umfasst, wobei jeder der Kanäle (4) einen Austrittspunkt (5) hat, lokalisiert auf der ersten Oberfläche (7) der dielektrischen Schicht (2) und einen anderen Austrittspunkt (6), lokalisiert auf der zweiten Oberfläche (8) der dielektrischen Schicht (2) und
wobei jede der ersten und zweiten Elektroden (1, 3) mindestens eine lokale Kontaktunterbrechung benachbart zu der dielektrischen Schicht (2) hat und lokalisiert gegenüber dem mindestens einen Austrittspunkt (5, 6), der den Durchfluss von elektrischem Strom durch den leitfähigen Kanal (4) in der dielektrischen Schicht (2) stört, wobei der elektrisch leitfähige Kanal (4) elektrische Defekte einschließt, vereinigt miteinander aufgrund des Zusammen-bruchs der dielektrischen Schicht (2).

3. Selbstheilender Kondensator nach Anspruch 2, wobei die lokale Kontaktunterbrechung ein Loch (9) ist, das eine gesamte Dicke einer entsprechenden einen der ersten und zweiten Elektroden penetriert; oder wobei die lokale Kontaktunterbrechung eine Domstruktur (10) ist.

4. Selbstheilender Kondensator nach Anspruch 1, wobei der Metallschaum Aluminium (Al) oder Nickel (Ni) oder Eisen (Fe) oder Kupfer (Cu) einschließt.

5. Selbstheilender Kondensator nach Anspruch 1, wobei eine Schmelztemperatur des Metallschaums von ungefähr 400°C bis ungefähr 700°C ist.

6. Selbstheilender Kondensator nach Anspruch 1, wobei ein Metallgehalt in dem Metallschaum von ungefähr 5 Gew.-% bis ungefähr 30 Gew.-% ist.

7. Selbstheilender Kondensator nach Anspruch 1, wobei der Metallschaum von der Art einer geschlossenen Blase ist.

8. Selbstheilender Kondensator nach Anspruch 1, wobei die erste Elektrode (1) den Metallschaum umfasst und die zweite Elektrode (3) eine Folie umfasst, vorzugsweise wobei die Folie Aluminium (Al) oder Nickel (Ni) oder Kupfer (Cu) oder Eisen (Fe) einschließt.

9. Selbstheilender Kondensator nach Anspruch 1, wobei die erste Elektrode (1) den Metallschaum umfasst und die zweite Elektrode (3) ein angeordnetes dünnes Filmmetall umfasst, vorzugsweise wobei das angeordnete dünne Filmmetall Aluminium (Al) oder Nickel (Ni) oder Eisen (Fe) oder Kupfer (Cu) einschließt.

10. Selbstheilender Kondensator nach Anspruch 1, wobei die Widerstandsfähigkeit des Metallschaums eingestellt ist, sodass der Metallschaum vor der dielektrischen Schicht (2) abschmilzt, wenn Strom in einem leitfähigen Kanal (4) durch die dielektrische Schicht (2) fließt, als ein Resultat der Anwendung einer Spannung zwischen der ersten Elektrode (1) und der zweiten Elektrode (3).

11. Selbstheilender Kondensator nach Anspruch 1, wobei die dielektrische Schicht (2) modifizierte organische Zusammensetzungen der allgemeinen Strukturformel I umfasst:

$$\{Cor\}(M)_n, \qquad (I)$$

wobei Cor eine polyzyklische organische Zusammensetzung ist mit konjugiertem $\pi$-System, wobei jedes M eine

modifizierende funktionale Gruppe ist; und n eine Zahl der modifizierenden funktionalen Gruppen ist, die größer als oder gleich Null ist.

**12.** Selbstheilender Kondensator nach Anspruch 11, wobei die modifizierenden funktionalen Gruppen ausgewählt sind aus der Gruppe bestehend aus Alkyl, Aryl substituiertem Alkyl und substituiertem Aryl.

**13.** Selbstheilender Kondensator nach Anspruch 1, wobei die dielektrische Schicht (2) ein Material umfasst, ausgewählt aus der Gruppe bestehend aus Oxiden, Oxynitriden und Fluoriden oder wobei die dielektrische Schicht (2) ein Material umfasst, ausgewählt aus der Gruppe bestehend aus $SiO_2$, $HfO_2$, $Al_2O_3$ und $Si_3N_4$.

**14.** Verfahren zum Produzieren eines selbstheilenden Kondensators, umfassend:

(a) Anwenden einer elektrischen Spannung über eine erste Elektrode (1) und eine zweite Elektrode (3), die getrennt sind mittels einer dielektrischen Schicht (2), wobei dieses Anwenden eine graduelle Erhöhung der elektrischen Spannung umfasst, um einen elektrischen Zusammenbruch zu erreichen, wobei mindestens eine aus den ersten und zweiten Elektroden (1, 3) einen Metallschaum einschließt;
(b) Anwenden eines elektrischen Felds über die erste Elektrode (1) und die zweite Elektrode (3), um elektrisch leitfähige Kanäle (4) zu bilden mit Austrittspunkten (5, 6) auf gegenüberliegenden Oberflächen (7, 8) der dielektrischen Schicht (2);
(c) Anwenden eines Stromes durch die ersten und zweiten Elektroden (1, 3), um (i) Joule-Heizen in mindestens einer aus den ersten und zweiten Elektroden (1, 3) zu induzieren und (ii) lokale Kontaktunterbrechungen in mindestens einer aus den ersten und zweiten Elektroden (1, 3) zu bilden, wobei die lokalen Kontaktunterbrechungen benachbart oder in der Nähe zu den Austrittspunkten (5, 6) gebildet werden; und
(d) Beenden der Anwendung des Stroms bei Bildung der lokalen Kontaktunterbrechungen.

**15.** Verfahren nach Anspruch 14, wobei die Anwendung des Stroms beendet wird, wenn eine ausreichende Menge von Metall verdampft ist aus mindestens einer der ersten und zweiten Elektroden (1, 3), um die lokalen Kontaktunterbrechungen zu bilden.

## Revendications

**1.** Condensateur autorégénérateur comprenant :

une première électrode (1),
une seconde électrode (3), et
une couche diélectrique (2) disposée entre lesdites première et seconde électrodes (1, 3) et ayant une première surface (7) en regard de la première électrode (1) et une seconde surface (8) en regard de la seconde électrode (3),
dans lequel lesdites électrodes (1, 3) sont planaires et positionnées presque ou sensiblement parallèlement l'une à l'autre,
dans lequel au moins l'une des électrodes (1, 3) inclut une mousse métallique, et
dans lequel la mousse métallique est configurée pour former un disjoncteur par évaporation de métal à une extrémité d'un canal conducteur (4) dans la couche diélectrique lorsque du courant s'écoule dans le canal conducteur à la suite d'une application d'une tension entre la première électrode (1) et la seconde électrode (3).

**2.** Condensateur autorégénérateur selon la revendication 1, dans lequel ladite couche diélectrique (2) comprend une pluralité de canaux électroconducteurs (4), chacun desdits canaux (4) ayant un premier point de sortie (5) situé sur la première surface (7) de la couche diélectrique (2) et un autre point de sortie (6) situé sur la seconde surface (8) de la couche diélectrique (2), et
dans lequel chacune desdites première et seconde électrodes (1, 3) comprend au moins un disjoncteur local adjacent à la couche diélectrique (2) et situé à l'opposé d'au moins un point de sortie (5, 6) qui interfère avec un passage de courant électrique à travers les canaux conducteurs (4) dans la couche diélectrique (2), dans lequel le canal électroconducteur (4) inclut des défauts électriques qui s'unissent ensemble en raison d'une rupture de la couche diélectrique (2).

**3.** Condensateur autorégénérateur selon la revendication 2, dans lequel le disjoncteur local est un trou (9) qui pénètre une épaisseur entière de l'une respective des première et seconde électrodes ; ou dans lequel le disjoncteur local

est une structure en dôme (10).

4. Condensateur autorégénérateur selon la revendication 1, dans lequel la mousse métallique inclut de l'aluminium (Al) ou du nickel (Ni) ou du fer (Fe) ou du cuivre (Cu).

5. Condensateur autorégénérateur selon la revendication 1, dans lequel une température de fusion de la mousse métallique est d'environ 400 °C à environ 700 °C.

6. Condensateur autorégénérateur selon la revendication 1, dans lequel une teneur en métal dans la mousse métallique se situe dans une plage d'environ 5 % à environ 30 % en poids.

7. Condensateur autorégénérateur selon la revendication 1, dans lequel la mousse métallique est du type à bulles fermées.

8. Condensateur autorégénérateur selon la revendication 1, dans lequel la première électrode (1) comprend la mousse métallique et la seconde électrode (3) comprend une feuille mince, de préférence dans lequel la feuille mince comprend de l'aluminium (Al) ou du nickel (Ni) ou du cuivre (Cu) ou du fer (Fe).

9. Condensateur autorégénérateur selon la revendication 1, dans lequel la première électrode (1) comprend la mousse métallique et la seconde électrode (3) comprend un métal en film mince déposé, de préférence dans lequel le métal en film mince déposé inclut de l'aluminium (Al) ou du nickel (Ni) ou du fer (Fe) ou du cuivre (Cu).

10. Condensateur autorégénérateur selon la revendication 1, dans lequel la résistivité de la mousse métallique est réglée de telle sorte que la mousse métallique s'érode avant la couche diélectrique (2) lorsque du courant s'écoule dans un canal conducteur (4) à travers la couche diélectrique (2) à la suite de l'application d'une tension entre la première électrode (1) et la seconde électrode (3).

11. Condensateur autorégénérateur selon la revendication 1, dans lequel la couche diélectrique (2) comprend des composés organiques modifiés de formule structurelle générale I :

$$\{Cor\}(M)_n \qquad (I)$$

où Cor est un composé organique polycyclique avec un système $\pi$conjugué, chaque M est un groupement fonctionnel modificateur; et n est un nombre des groupements fonctionnels modificateurs qui est supérieur ou égal à zéro.

12. Condensateur autorégénérateur selon la revendication 11, dans lequel les groupements fonctionnels modificateurs sont choisis dans le groupe constitué de groupements alkyle, aryle, alkyle substitué et aryle substitué.

13. Condensateur autorégénérateur selon la revendication 1, dans lequel ladite couche diélectrique (2) comprend un matériau choisi dans le groupe constitué d'oxydes, de nitrures, d'oxynitrures et de fluorures ou dans lequel ladite couche diélectrique (2) comprend un matériau choisi dans le groupe constitué de $SiO_2$, $HfO_2$, $Al_2O_3$ et $Si_3N_4$.

14. Procédé de production d'un condensateur autorégénérateur comprenant :

(a) une application d'une tension électrique aux bornes d'une première électrode (1) et d'une seconde électrode (3) qui sont séparées par une couche diélectrique (2), laquelle application comprend un renforcement graduel de la tension électrique pour obtenir une rupture électrique, dans lequel au moins l'une des première et seconde électrodes (1, 3) inclut une mousse métallique ;
(b) une application d'un champ électriques aux bornes de la première électrode (1) et de la seconde électrode (3) pour former des canaux électroconducteurs (4) avec des points de sortie (5, 6) sur des surfaces opposées (7, 8) de la couche diélectrique (2) ;
(c) une application d'un courant à travers les première et seconde électrodes (1, 3) pour (i) induire un chauffage Joule dans au moins l'une des première et de seconde électrodes (1, 3) et (ii) former des disjoncteurs locaux dans au moins l'une des première et seconde électrodes (1, 3), lesquels disjoncteurs locaux sont formés de manière adjacente ou à proximité des points de sortie (5, 6) ; et
(d) un achèvement de l'application du courant lors d'une formation des disjoncteurs locaux.

15. Procédé selon la revendication 14, dans lequel l'application du courant est achevée lorsqu'une quantité suffisante

de métal s’est évaporée d’au moins l’une des première et secondes électrodes (1, 3) pour former les disjoncteurs locaux.

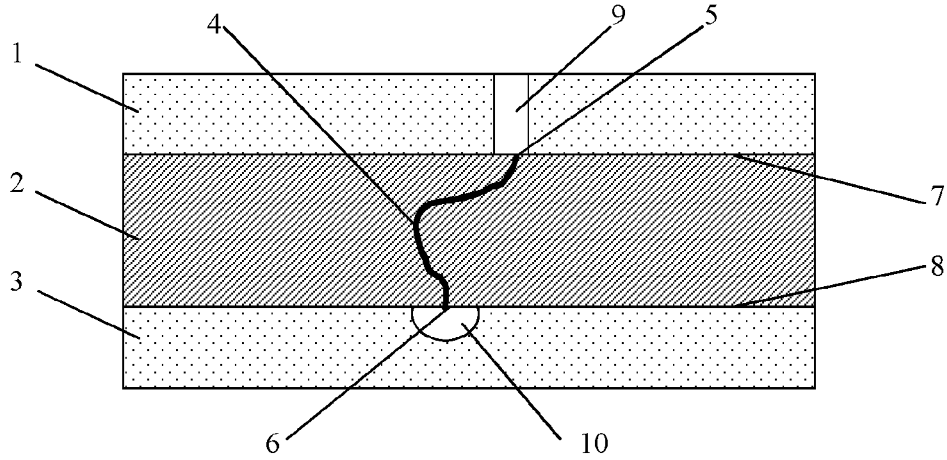


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001093778 A
- CN 103258656
- US 2008002329 A